# EUROPEAN PATENT SPECIFICATION

(11) **EP 2 354 902 B1**
(45) Date of publication and mention of the grant of the patent: **21.06.2017**
(21) Application number: 10161665.4
(22) Date of filing: 30.04.2010
(51) Int. Cl.: G06F 3/041, G06F 3/042

(54) **Touch input method and device thereof**
Berührungseingabeverfahren und Vorrichtung dafür
Procédé d'entrée tactile et dispositif correspondant

(30) Priority: 01.02.2010 TW 099102893
(43) Date of publication of application: 10.08.2011
(73) Proprietor: Acer Incorporated, Hsichih, Taipei Hsien 221 (TW)
(72) Inventor: Ko, Chueh-Pin, 221, Taipei (TW); Huang, Chao-Shih, 221, Taipei (TW)
(74) Representative: Michalski Hüttermann & Partner Patentanwälte mbB

(56) References cited:
- EP-A2- 2 144 143
- US-A1- 2006 038 198
- US-A1- 2009 033 638

## Description

### FIELD OF THE INVENTION

The present invention relates to a touch input method and a device thereof, and more particularly to a touch input method and a device thereof in which a displayed image content is used as a reference for determining touch information.

### BACKGROUND OF THE INVENTION

Generally, in a liquid crystal display (LCD), a backlight module is used to produce a light source, and the transmittance of the backlight is changed by controlling the twist and deformation of the liquid crystal, in order to determine the brightness of the image displayed on the display. Currently, the LCD displays the image mainly using cold cathode fluorescent lamps (CCFL) or light-emitting diodes (LEDs) as the backlight thereof.

Following the progress of scientific technologies, various types of touch screens, including optic-type touch screens, have been developed and largely improved in recent years. The currently available optic-type touch screens can be divided into out-cell and in-cell touch screens. The out-cell touch screen mainly uses two infrared light emitting units arranged at two corners of the screen to emit infrared light, and uses image acquisition units to acquire shades formed on reflection strips when the infrared lights are blocked by a touch object. A processor of the optic-type touch screen computes the shades to find out the position of the touch point. While the out-cell touch screen can be advantageously applied to a large-size touch display, the touch display adopting the out-cell design must have a predetermined mechanism thickness and therefore fails to be low-profile and light because the touch display must be provided with reflective strips.

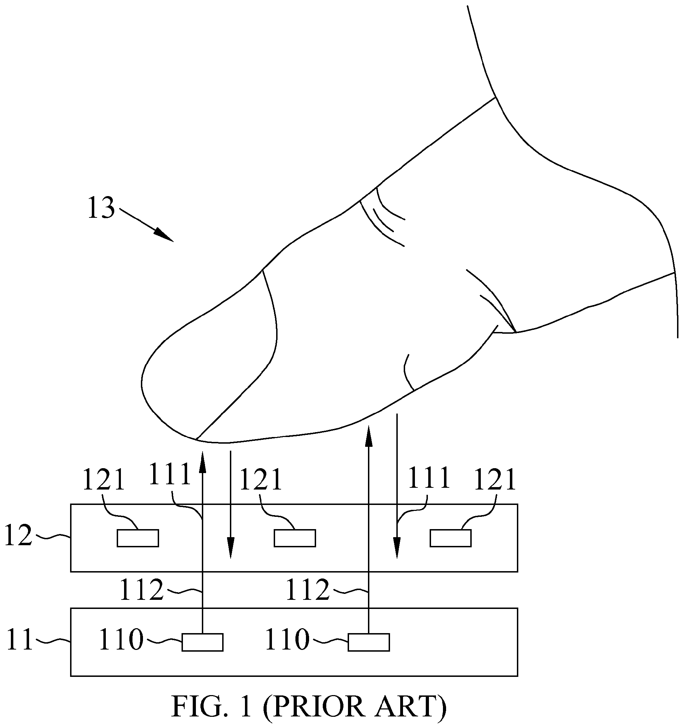

An in-cell touch screen uses sensors to sense the level of brightness of a visible light, so as to achieve the purpose of recognizing the position of a touch point. The in-cell touch screen advantageous allows integrated manufacturing process, enabling the touch screen to have reduced thickness. Fig. 1 schematically shows a surface of a conventional touch display 12. As shown, infrared LEDs 110 in a backlight source 11 emit invisible lights 111 having a fixed level of brightness. When an object 13 appears above or on the surface of the touch display 12, in-cell light sensors of the display 12 would detects reflected lights 112 of the invisible lights 111 reflected by the object 13, and when there is not any object above or on the surface of the touch display 12, the in-cell light sensors would output a no-detection response. In this manner, the touch display technique is implemented. However, when the image displayed on the display 12 includes different colors and different levels of brightness, pixels 121 in the display 12 at different positions would show different states, and the reflected lights 112 reflected by the touch object 13 would have different light intensities from one another, which results in reduced resolution in a proximal touch image analysis or easily results in incorrect determination of the object touch position. For example, when the display 12 has lowered light transmittance due to displaying of specific colors, even if there is an object 13 approaching toward the display 12, the in-cell light sensors would detect a relatively low light intensity due to the low light transmittance and therefore incorrectly determines that no object is on the display 12. In the related art, US 2009/033638 discloses an image display unit and method of detecting object. EP 2144143 discloses an image input/output device and method of correcting photo-reception level in image input/output device, and method of inputting image. US 2006/038198 discloses a device and a method for producing output light having a wavelength spectrum in the visible range and the infrared range, using a fluorescent material.

### SUMMARY OF THE INVENTION

It is therefore a primary object of the present invention to provide a touch input method and device, so as to solve the problem of failing to have increased image resolution or having reduced object recognition power due to different levels of brightness or colors at different zones of an image displayed on a display screen.

To achieve the above and other objects, a first embodiment of the touch input method according to the present invention is applicable to a touch display, which includes a display module for displaying an image, a backlight module for emitting a light source, at least one light-sensing unit for sensing a reflected light of the light source reflected by at least one object on the display module and generating a light intensity signal correspondingly, and a processing module for receiving the light intensity signal and determining at least one touch point on the display module touched by the at least one object based on the received light intensity signal. The touch input method includes the steps of using the processing module to receive the image displayed on the display module, using the processing module to analyze the image and obtain an image analysis result; and using the processing module to regulate a light intensity of an invisible light emitted from the backlight module based on the image analysis result.

To achieve the above and other objects, an embodiment of the touch input device according to the present invention includes a display module, a backlight module, at least one light-sensing unit, and a processing module. The display module displays an image. The backlight module emits a light source. The light-sensing unit senses a reflected light of the light source reflected by at least one object on the display module and generates a light intensity signal correspondingly. The processing module is connected to the display module, the backlight module and the light-sensing unit, and the processing module receives the light intensity signal and determines at least one touch point on the display module touched by the at least one object based on the received light intensity signal. The processing module also receives the image displayed on the display module and analyzes the image to obtain an image analysis result, and regulates a light intensity of an invisible light emitted from the backlight module based on the image analysis result.

To achieve the above and other objects, a second embodiment of the touch input method according to the present invention is applicable to a touch display, which includes a display module for displaying an image, a backlight module for emitting a light source, at least one light-sensing unit for sensing a reflected light of the light source reflected by at least one object on the display module and generating a light intensity signal correspondingly, a storage unit for storing a threshold value, and a processing module for receiving the light intensity signal and the threshold value and comparing the received light intensity signal with the threshold value to determine at least one touch point on the display module touched by the at least one object. The touch input method includes the steps of using the processing module to receive the image displayed on the display module; using the processing module to analyze the image and obtain an image analysis result; and using the processing module to adjust the threshold value based on the image analysis result.

To achieve the above and other objects, another embodiment of the touch input device according to the present invention includes a display module, a backlight module, at least one light-sensing unit, a storage unit, and a processing module. The display module displays an image; the backlight module emits a light source; the light-sensing unit senses a reflected light of the light source reflected by at least one object on the display module and generates a light intensity signal correspondingly. The storage unit stores a threshold value. The processing module is connected to the display module, the backlight module, the storage unit and the light-sensing unit and the processing module receives the light intensity signal and the threshold value, and compares the received light intensity signal with the threshold value to determine at least one touch point on the display module touched by the at least one object. The processing module also receives the image displayed on the display module and analyzes the image to obtain an image analysis result, and adjusts the threshold value based on the image analysis result.

With the above arrangements, the touch input method and the device thereof according to the present invention has one or more of the following advantages:
(1) With the touch input method and device of the present invention, an image displayed on a display screen is analyzed, and an intensity of an invisible light emitted from the touch display screen is regulated according to a result from the image analysis, so as to obtain increased image resolution.
(2) With the touch input method and device of the present invention, an image displayed on a display screen is analyzed, and a sensitivity of the touch display screen in receiving an invisible light intensity is regulated according to a result from the image analysis, so as to obtain increased image resolution.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 schematically shows the surface of a conventional touch display;
Fig. 2 is a block diagram of a first embodiment of a touch input device according to the present invention;
Fig. 3 is a schematic cross-sectional view of a display module and a backlight module for the first embodiment of the touch input device according to the present invention;
Fig. 4A is a conceptual view showing an image analysis conducted by the touch input device of the present invention;
Fig. 4B is a conceptual view showing another image analysis conducted by the touch input device of the present invention;
Fig. 5 is a front view showing a second embodiment of the touch input device according to the present invention;
Fig. 6 is a flowchart showing the steps included in a first embodiment of a touch input method according to the present invention;
Fig. 7 is a flowchart showing the steps for producing an image analysis result according to the touch input method of the present invention;
Fig. 8 is a block diagram of a third embodiment of the touch input device according to the present invention;
Fig. 9A is a conceptual view showing an adjustment of threshold values conducted by the third embodiment of the touch input device according to the present invention;
Fig. 9B is a conceptual view showing another adjustment of threshold values conducted by the third embodiment of the touch input device according to the present invention; and
Fig. 10 is a flowchart showing the steps included in a second embodiment of the touch input method according to the present invention.

### DETAILED DESCRIPTION OF THE PREFERRED EMBODIMENTS

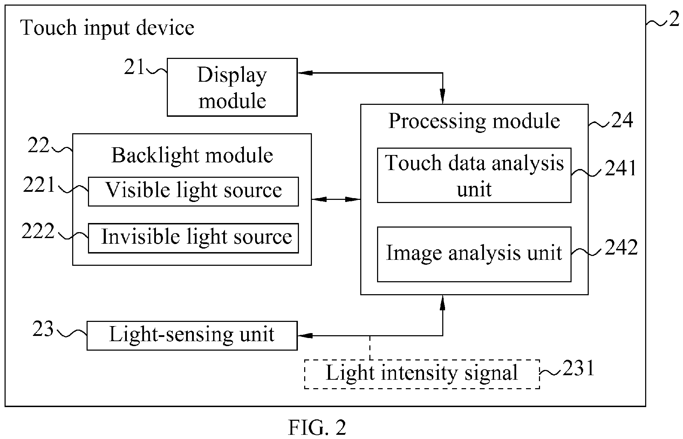

The present invention will now be described with some preferred embodiments thereof. For the purpose of easy to understand, elements that are the same in the preferred embodiments are denoted by the same reference numerals . Please refer to Fig. 2 that is a block diagram of a first embodiment of a touch input device 2 according to the present invention. As shown, the touch input device 2 in the first embodiment includes a display module 21, a backlight module 22, a light-sensing unit 23, and a processing module 24. The processing module 24 is electrically connected to the display module 21, the backlight module 22 and the light-sensing unit 23.

The display module 21 is able to display an image, and is preferably a liquid crystal display (LCD) screen or an organic light emitting diode (OLED) screen. The backlight module 22 includes a visible light source 221 and an invisible light source 222. The backlight module 22 is arranged behind the display module 21 and can be a direct-lit backlight module or an edge-lit backlight module. Herein, the invisible light source 222 is preferably an infrared (IR) light emitted from an IR light emitting unit or an IR light emitted from a red light emitting unit having a relatively wider light spectrum. And, the visible light source 221 preferably includes red-light, green-light and blue-light LEDs emitting red light, green light and blue light, respectively.

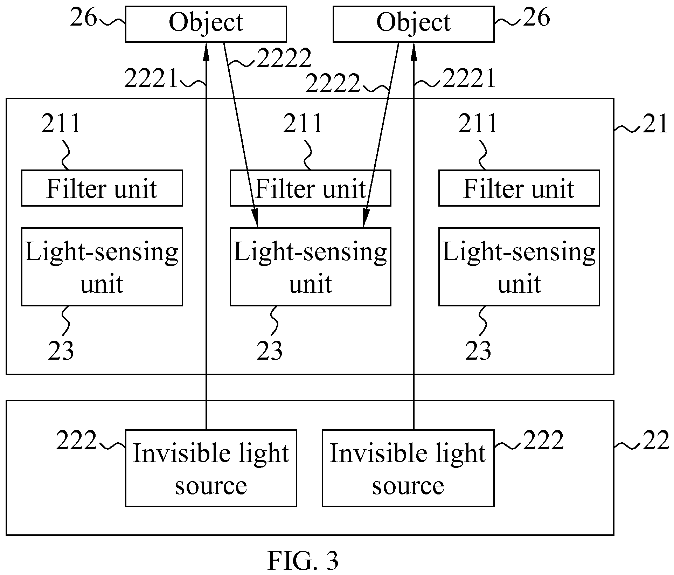

Please also refer to Fig. 3 that is a schematic cross-sectional view of the display module 21 and the backlight module 22 for the first embodiment of the touch input device 2 according to the present invention. In Fig. 3, the display module 21 includes at least one filter unit 211 and at least one light-sensing unit 23. The filter unit 211 is able to absorb a visible light while the light-sensing unit 23 is able to receive an IR light. When an object 26 is in the proximity of a touch surface of the display module 21, an IR light 2221 emitted from the invisible light source 222 of the backlight module 22 would be reflected by the object 26. The light-sensing unit 23 receives the reflected invisible light 2222 and generates a light intensity signal 231 according to the reflected IR light 2222. The light intensity signal 231 is sent to the processing module 24 . It is understood the light-sensing unit 23 can be arranged on the touch input device 2 at different positions without being limited to that shown in Fig. 3. That is, in addition to being arranged inside the display module 21, the light-sensing unit 23 can be otherwise externally attached to the display module 21. And, an areal sensing can be achieved when a plurality of light-sensing units 23 is provided.

In Fig. 2, the processing module 24 includes a touch data analysis unit 241 and an image analysis unit 242. The touch data analysis unit 241 can analyze according to the received light intensity signal 231 to obtain touch information, such as the number of touch points, touch positions, touch gestures, or touch height. The image analysis unit 242 is able to analyze according to the content of the image displayed on the display module 21 to obtain an image analysis result. The image analysis result is preferably an image gray level distribution analysis result or a red light distribution analysis result, so as to obtain the actual brightness of light or the actual light quantity of IR light transmitted from different zones of the display module 21.

In the case IR lights 2221 are emitted from a plurality of red light emitting units, the image analysis unit 242 is able to conduct the red light distribution analysis, so as to obtain red light quantities and IR light quantities at different zones of the display module 21.

According to the obtained IR light quantities, the processing module 24 selects to increase or decrease the driving current or driving voltage of the red light emitting units at different zones. For example, for zones having relatively weak transmitted IR light quantities, the driving current or driving voltage of the red light emitting units thereat can be increased, and for zones having relatively high transmitted IR light quantities, the driving current or driving voltage of the red light emitting units thereat can be decreased, so that the IR lights reflected by the object in different zones of the display module can have the same reflected light intensity. In this manner, the object can perform the same touch movement at different zones. While the actual light quantities of transmitted IR lights at different zones are different to result in the generation of different light intensity signals by different sensing units 23, the processing module 24 can still regulate the IR light intensities to thereby make correct determination of the touch movement.

In the case IR lights are emitted from a plurality of IR light emitting units, the image analysis unit 242 can conduct the gray level distribution analysis, so as to obtain actual levels of brightness at different zones of the display module and further obtain the IR light quantities at different zones accordingly. In this manner, the processing module 24 can regulate the driving voltage or current used to drive the IR light emitting units, so that the IR lights reflected by the touch object at different zones of the display module 21 can have the same reflected light intensity.

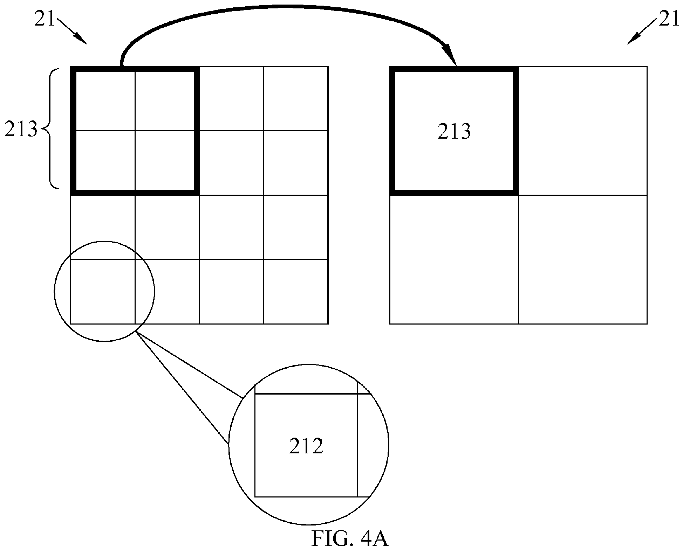

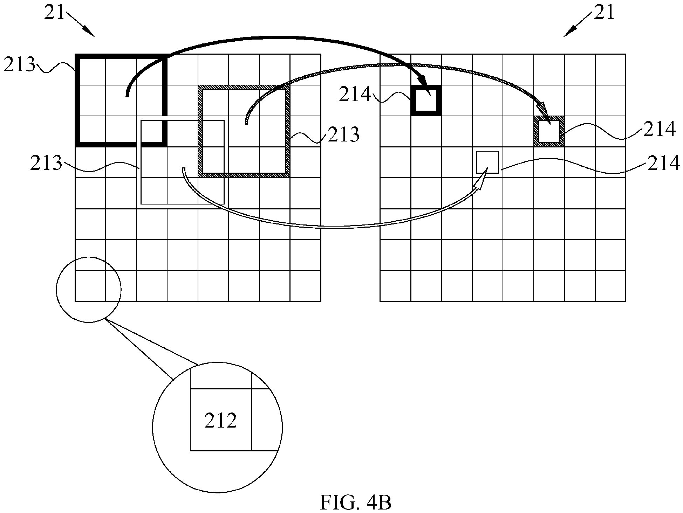

The driving voltage or driving current of the above-mentioned red light emitting units or IR light emitting units can be regulated in three different ways. In the first way, each of the red light emitting units or the IR light emitting units in the display module 21 is analyzed, so as to individually regulate the light quantity of the red light emitting unit or the IR light emitting unit in every pixel 212. In the second way, the red light emitting units or the IR light emitting units in a specified zone are analyzed, as shown in Fig. 4A. In Fig. 4A, the specified zone 213 comprises four (4) pixels 212 in a 2x2 array. The image analysis unit 242 conducts the red light analysis or the gray level analysis of the image in each individual specified zone, and finds an average of the red light quantity or the IR light quantity in the specified zone, so that the IR light quantity distribution in all specified zones is obtained and the driving voltage or driving current of the red light emitting units or the IR light emitting units within the same specified zone is increased or reduced at the same time. In the third way, only the red lights or the IR lights emitted from the pixels 212 located surrounding the position of a touch point 214 are analyzed, as shown in Fig. 4B, and only the driving current or driving voltage of the analyzed red light emitting units or the analyzed IR light emitting units is regulated. In the case of having multiple touch points 214, all the red light emitting units or the IR light emitting units corresponding to the touch points 214 are analyzed at the same time.

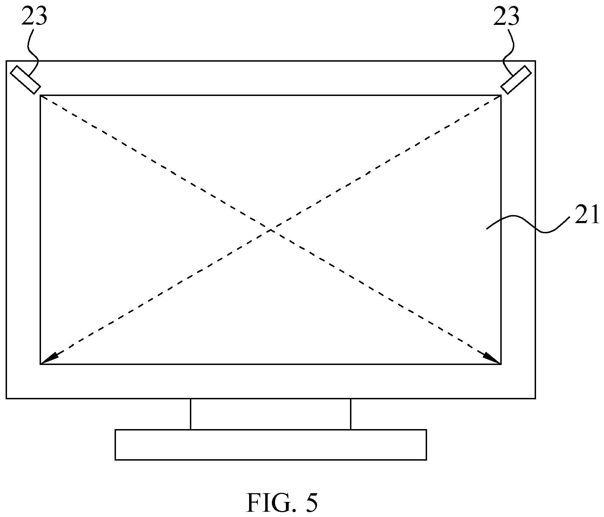

Please refer to Fig. 5 that is a front view showing a second embodiment of the touch input device 2 according to the present invention. The second embodiment is different from the first embodiment in that, two light-sensing units 23 in the second embodiment are arranged at an upper left corner and an upper right corner of the display module 21. In this case, the light-sensing units 23 each have an angle of view wide enough for covering a large part of the display module 21. Alternatively, an additional light-sensing unit 23 can be provided on the display module 21 between the first two light-sensing units 23. The light-sensing units 23 receive the reflected IR lights 2222 to generate light intensity signals 231 to the touch data analysis unit 241, at where the above-mentioned touch information can be computed using the known triangle positioning algorithm. A surface of a display zone of the display module 21 and a space in front of the display zone are defined as a coordinate detection zone. Since all other structures of the second embodiment are similar to the first embodiment, they are not repeatedly described herein.

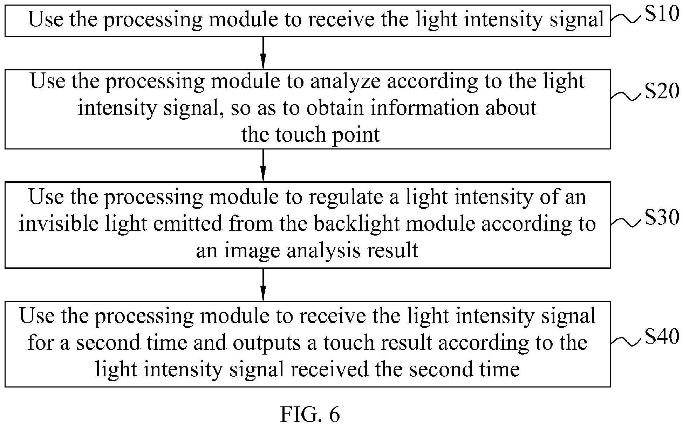

Fig. 6 is a flowchart showing the steps included in a first embodiment of a touch input method according to the present invention. The touch input method is applicable to a touch display. The touch display includes a display module, a backlight module, at least one light-sensing unit, and a processing module. The display module is able to display an image, the backlight module is able to emit a light source, and the light-sensing unit is able to sense a reflected light of the light source reflected by at least one object on the display module and generate a light intensity signal corresponding to the reflected light.

In a first step S10 of the touch input method according to the first embodiment as shown in Fig. 6, use the processing module to receive the light intensity signal.

In a second step S20, use the processing module to analyze according to the light intensity signal, so as to obtain information about the touch point.

In a third step S30, use the processing module to regulate a light intensity of an invisible light emitted from the backlight module based on an image analysis result.

In a fourth step S40, use the processing module to receive the light intensity signal for a second time and output a touch result according to the light intensity signal received the second time.

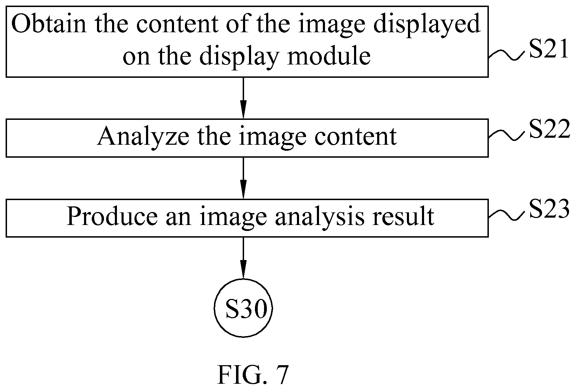

Please refer to Fig. 7, which is a flowchart showing the steps for producing the image analysis result used in the third step S30. The steps include:
S21: obtain the content of the image displayed on the display module;
S22: analyze the image content; and
S23: produce an image analysis result and then perform the third step S30 shown in Fig. 6.

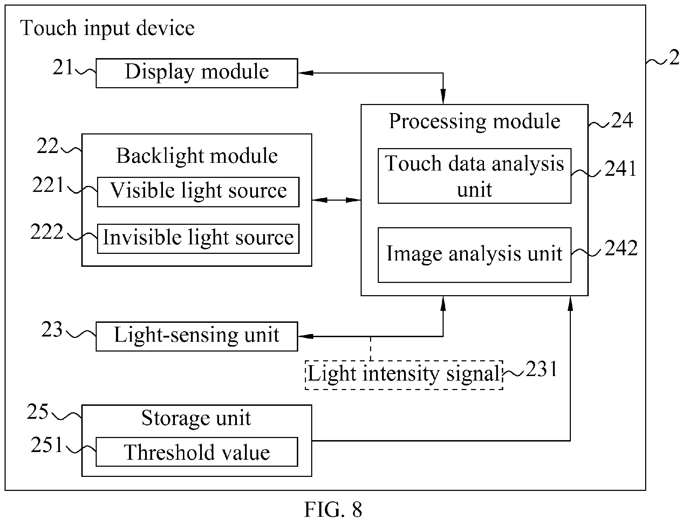

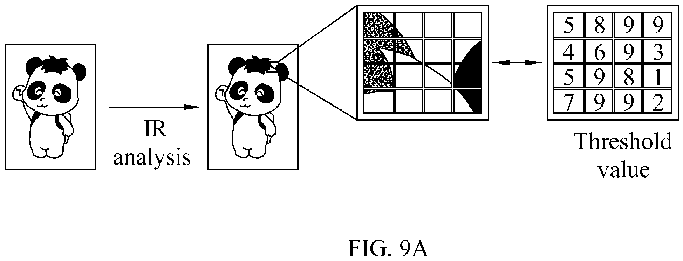

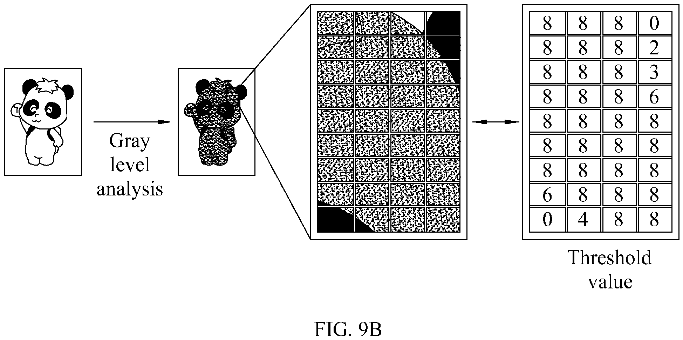

Please refer to Fig. 8 that is a block diagram of a third embodiment of the touch input device 2 according to the present invention. The touch input device 2 of the third embodiment is different from the first embodiment in further having a storage unit 25 for storing a threshold value 251, and the processing module 24 adjusting the threshold value according to an image analysis result. When the light intensity signal 231 is larger than the threshold value 251, the processing module 24 determines there is a touch object on a position corresponding to the light intensity signal 231, and the touch input device 2 would analyze the image content shown by the display module 21 and adjust the threshold value 251 accordingly, as shown in Figs. 9A and 9B. In Fig. 9A, the image analysis unit 242 conducts an IR analysis of the displayed image. Since the image content in an upper half of the frame includes dark colors while the image content in a lower half of the frame includes light colors, the touch data analysis unit 241 might make an improper determination when the same threshold value is set for the upper half and the lower half and the touch object is the same. Therefore, in the present invention, the threshold value is adjusted according to the IR analysis by reducing the threshold value corresponding to the displayed image content with dark colors and increasing the threshold value corresponding to the display content with light colors, so that the touch data analysis unit 241 can determine the correct touch result based on the light intensity signals generated corresponding to the reflected light intensities and the adjusted threshold values 251. Fig. 9B is different from Fig. 9A in that the image analysis unit 242 transforms the displayed image content into different gray levels, so as to obtain a gray level distribution analysis result, based on which the processing module 24 regulates the threshold values 251 set for the light-sensing units 23 corresponding to the touch position. Since all other structures of the third embodiment are similar to the first embodiment, they are not repeatedly described herein.

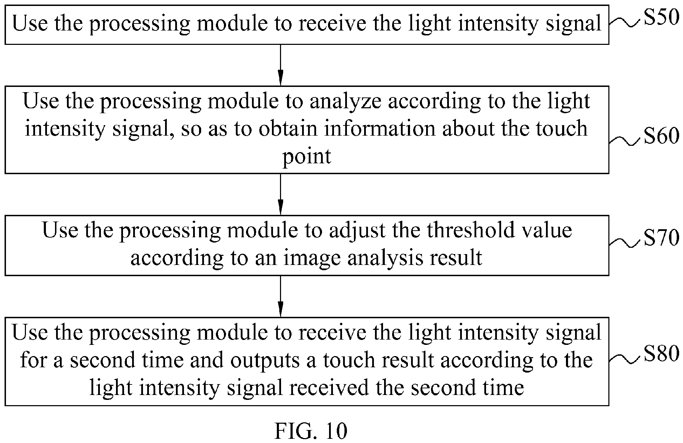

Please refer to Fig. 10 that is a flowchart showing the steps included in a second embodiment of the touch input method according to the present invention. The touch input method in the second embodiment is different from the first embodiment in that the second embodiment is applicable to a touch display similar to that in the first embodiment but further including a storage unit for storing a threshold value. In the touch display for implementing the touch input method in the second embodiment, the processing module compares the received light intensity signal with the threshold value to determine the touch result. When the light intensity signal is larger than the threshold value, the processing module determines the object on the display module performs a touch movement; and when the light intensity signal is smaller than the threshold value, the processing module determines the object does not perform a touch movement.

In a first step S50 of the touch input method according to the second embodiment as shown in Fig. 10, use the processing module to receive the light intensity signal.

In a second step S60, use the processing module to analyze according to the light intensity signal, so as to obtain information about the touch point.

In a third step S70, use the processing module to adjust the threshold value according to an image analysis result.

In a fourth step S80, the processing module receives the light intensity signal for a second time and outputs a touch result according to the light intensity signal received the second time.

Since the steps for producing the image analysis result according to the second embodiment of the touch input method are similar to those included in the flowchart shown in Fig. 7, they are not repeatedly described herein.

In the first embodiment of the touch input method, the processing module regulates the intensity of the invisible light according to the image analysis result in order to make a correct determination of the touch movement. On the other hand, in the second embodiment of the touch input method, the processing module adjusts the threshold value instead of regulating the invisible light intensity. That is, in the second embodiment, while the light-sensing units generate different light intensity signals corresponding to different reflected light intensities, the processing module can still make a correct determination of the touch through comparison of the threshold values with the light intensity signals because the threshold values have already been adjusted by the processing module according to the image analysis result.

## Claims

1. A touch input method applicable to a touch display, the touch display comprising a display module (21) with multiple pixels (212), a backlight module (22), light-sensing units (23) and a processing module (24),
the display module (21) being adapted to display an image,
the backlight module (22) including invisible light sources (222) which are adapted to emit invisible light (111),
the light-sensing units (23) being adapted to sense reflected invisible light which is emitted by the invisible light sources (222) and reflected by at least one object (26) on the display module (21) and generate a light intensity signal (231) correspondingly, and
the processing module (24) being adapted to receive the light intensity signal (231) and determine based on the received light intensity signal (231) at least one touch point (214) on the display module (21) touched by the at least one object (26), the touch input method comprising the following steps of:
using the processing module (24) to receive the image displayed on the display module (21); **characterized by** using the processing module (24) to analyze the image to obtain an image analysis result in every pixel (212) in the display module, specified zones of pixels (212) or pixels (212) located surrounding the position of the touch point (214); and
using the processing module (24) to regulate the light intensity of the invisible light (111) emitted from the invisible light sources (222) of the backlight module (22) according to the image analysis result for every pixel (212), zones of pixels (212) or pixels (212) located surrounding the position of the touch point (214), respectively.

2. The touch input method as claimed in claim 1, wherein the image analysis result is a gray level distribution analysis result.

3. The touch input method as claimed in claim 1 or 2, wherein the backlight module (22) further includes at least one red light emitting unit, one green light emitting unit, and one blue light emitting unit; and the invisible light (111) is additionally emitted from the red light emitting unit.

4. The touch input method as claimed in any of claims 1 to 3, wherein the image analysis result is a red light distribution analysis result.

5. A touch input device (2), comprising:
a display module (21) capable of displaying an image;
a backlight module (22) including invisible light sources (222), the invisible light sources (222) being capable of emitting invisible light (111);
light-sensing units (23) capable of sensing reflected invisible light emitted by the invisible light sources (222) and reflected by at least one object (26) on the display module (21) and generating a light intensity signal (231) correspondingly; and
a processing module (24) being connected to the display module (21), the backlight module (22) and the light-sensing units (23);
the processing module (24) being capable of receiving the light intensity signal (231) and determining based on the received light intensity signal (231) at least one touch point (214) on the display module (21) touched by the at least one object (26);
wherein the processing module (24) receives the image displayed on the display module (21) and analyzes the image to obtain an image analysis result in every pixel (21 2) in the display module, specified zones of pixels (212) or pixels (212) located surrounding the position of the touch point (214), and regulates the light intensity of an invisible light (111) emitted from the invisible light sources (222) of the backlight module (22) according to the image analysis result for every pixel (212), zones of pixels (212) or pixels (212) located surrounding the position of the touch point (214), respectively.

6. The touch input device (2) as claimed in claim 5, wherein the invisible light (111) is infrared (IR) light (2221).

7. The touch input device (2) as claimed in claim 6, wherein the backlight module (22) further includes at least one infrared (IR) light emitting unit for emitting the IR light (2221).

8. The touch input device (2) as claimed in claim 7, wherein the backlight module (22) further includes at least one red light emitting unit, one green light emitting unit and one blue light emitting unit; and the IR light (2221) additionally is emitted from the red light emitting unit.

9. The touch input device (2) as claimed in any of claims 5 to 8, wherein the at least one light-sensing unit (23) is arranged inside the backlight module (22).

10. A touch input method applicable to a touch display, the touch display including a display module (21), a backlight module (22), light-sensing units (23), a storage unit (25) and a processing module (24),
the display module (21) being adapted to display an image, the backlight module (22) including invisible light sources (222),
the invisible light sources (222) being adapted to emit invisible light (111),
the light-sensing unit (23) being adapted to sense reflected light of the invisible light emitted by the invisible light sources (222) and reflected by at least one object (26) on the display module (21) and generate a light intensity signal (231) correspondingly,
the storage unit (25) being adapted to store a threshold value (251), and
the processing module (24) being adapted to receive the light intensity signal (231) and the threshold value (251) and compare the light intensity signal (231) with the threshold value (251) in order to determine at least one touch point (214) on the display module (21) touched by the at least one object (26),
the touch input method comprising the following steps of:
using the processing module (24) to receive the image displayed on the display module (21); **characterized by** using the processing module (24) to analyze the image to obtain an image analysis result in every pixel (212) in the display module, specified zones of pixels (212) or pixels (212) located surrounding the position of the touch point (214); and
using the processing module (24) to adjust the threshold value (251) according to the image analysis result for every pixel (212), zones of pixels (212) or pixels (212) located surrounding the position of the touch point (214), respectively.

11. The touch input method as claimed in claim 10, wherein the image analysis result is a gray level distribution analysis result.

12. The touch input method as claimed in claim 10, wherein the image analysis result is a red light distribution analysis result.

13. A touch input device (2), comprising:
a display module (21) capable of displaying an image;
a backlight module (22) including invisible light sources (222) which are capable of emitting invisible light (111);
at least one light-sensing unit (23) capable of sensing reflected light of the invisible light emitted by the invisible light sources (222) and reflected by at least one object (26) on the display module (21) and generating a light intensity signal (231) correspondingly;
a storage unit (25) capable of storing a threshold value (251); and
a processing module (24) being connected to the display module (21), the backlight module (22), the light-sensing units (23) and the storage unit (25);
the processing module (24) being capable of receiving the light intensity signal (231) and the threshold value (251), and comparing the light intensity signal (231) with the threshold value (251) in order to determine at least one touch point (214) on the display module (21) touched by the at least one object (26);
wherein the processing module (24) receives the image displayed on the display module (21) and analyzes the image to obtain an image analysis result in every pixel (21 2) in the display module, specified zones of pixels (212) or pixels (212) located surrounding the position of the touch point (214), and adjusts the threshold value (251) according to the image analysis result for every pixel (212), zones of pixels (212) or pixels (212) located surrounding the position of the touch point (214), respectively.

14. The touch input device (2) as claimed in claim 13, wherein the invisible light (111) is IR light (2221).

15. The touch input device (2) as claimed in claim 14, wherein the backlight module (22) further includes at least one IR light emitting unit for emitting the IR light (2221).

16. The touch input device (2) as claimed in claim 15, wherein the backlight module (22) further includes at least one red light emitting unit, one green light emitting unit and one blue light emitting unit, and the IR light (2221) is additionally emitted from the red light emitting unit.

## Patentansprüche

1. Berührungseingabeverfahren für ein Touch-Display, wobei das Touch-Display ein Anzeigemodul (21) mit mehreren Pixeln (212), ein Hintergrundbeleuchtungsmodul (22), Lichterfassungseinheiten (23) und ein Verarbeitungsmodul (24) aufweist,
wobei das Anzeigemodul (21) dazu geeignet ist, ein Bild darzustellen,
das Hintergrundbeleuchtungsmodul (22) Quellen (222) für unsichtbares Licht aufweist, die dazu geeignet sind, unsichtbares Licht (111) zu emittieren,
die Lichterfassungseinheiten (23) dazu geeignet sind, reflektiertes unsichtbares Licht, das durch die Quellen (222) für unsichtbares Licht emittiert und durch mindestens ein Objekt (26) auf dem Anzeigemodul (21) reflektiert wird, zu erfassen und ein entsprechendes Lichtintensitätssignal (231) zu erzeugen, und
das Verarbeitungsmodul dazu geeignet ist, das Lichtintensitätssignal (231) zu empfangen und basierend auf dem empfangenen Lichtintensitätssignal (231) mindestens einen durch das mindestens eine Objekt (26) berührten Berührungspunkt auf dem Anzeigemodul (21) zu bestimmen, wobei das Berührungseingabeverfahren die folgenden Schritte aufweist:
Verwenden des Verarbeitungsmoduls (24) zum Empfangen des auf dem Anzeigemodul (21) dargestellten Bildes;
**gekennzeichnet durch**
Verwenden des Verarbeitungsmoduls (24) zum Analysieren des Bildes, um ein Bildanalyseergebnis für jedes Pixels (212) im Anzeigemodul, für spezifizierte Bereiche von Pixeln (212) oder für Pixel (212) zu erhalten, die in der Umgebung der Position des Berührungspunktes (214) angeordnet sind; und
Verwenden des Verarbeitungsmoduls (24) zum Regeln der Lichtintensität des von den Quellen (222) für unsichtbares Licht des Hintergrundbeleuchtungsmoduls (22) emittierten unsichtbaren Lichts (111) gemäß dem Bildanalyseergebnis für jedes Pixel (212), für Bereiche von Pixeln (212) oder für Pixel (212), die in der Umgebung der Position des Berührungspunktes (214) angeordnet sind.

2. Verfahren nach Anspruch 1, wobei das Bildanalyseergebnis eine Graustufenwertverteilungsanalyseergebnis ist.

3. Verfahren nach Anspruch 1 oder 2, wobei das Hintergrundbeleuchtungsmodul (22) ferner mindestens eine rotes Licht emittierende Einheit, eine grünes Licht emittierende Einheit und eine blaues Licht emittierende Einheit aufweist, und wobei das unsichtbare Licht (111) zusätzlich von der rotes Licht emittierenden Einheit emittiert wird.

4. Verfahren nach einem der Ansprüche 1 bis 3, wobei das Bildanalyseergebnis ein Verteilungsanalyseergebnis für rotes Licht ist.

5. Berührungseingabevorrichtung (2), mit:
einem Anzeigemodul (21), das dazu geeignet ist, ein Bild darzustellen;
einem Hintergrundbeleuchtungsmodul (22) mit Quellen (222) für unsichtbares Licht, wobei die Quellen (222) für unsichtbares Licht dazu geeignet sind, unsichtbares Licht (111) zu emittieren,
Lichterfassungseinheiten (23), die dazu geeignet sind, reflektiertes unsichtbares Licht, das durch die Quellen (222) für unsichtbares Licht emittiert und durch mindestens ein Objekt (26) auf dem Anzeigemodul (21) reflektiert wird, zu erfassen und ein entsprechendes Lichtintensitätssignal (231) zu erzeugen, und
einem Verarbeitungsmodul (24), das mit dem Anzeigemodul (21), dem Hintergrundbeleuchtungsmodul (22) und den Lichterfassungseinheiten (23) verbunden ist,
wobei das Verarbeitungsmodul (24) dazu geeignet ist, das Lichtintensitätssignal (231) zu empfangen und basierend auf dem empfangenen Lichtintensitätssignal (231) mindestens einen durch das mindestens eine Objekt (26) berührten Berührungspunkt (214) auf dem Anzeigemodul (21) zu bestimmen;
wobei das Verarbeitungsmodul (24) das auf dem Anzeigemodul (21) dargestellte Bild empfängt und das Bild analysiert, um ein Bildanalyseergebnis für jedes Pixel (212) im Anzeigemodul, für spezifizierte Bereiche von Pixeln (212) oder für Pixel (212) zu erhalten, die in der Umgebung der Position des Berührungspunktes (214) angeordnet sind, und die Lichtintensität von durch die Quellen (222) für unsichtbares Licht des Hintergrundbeleuchtungsmoduls (22) emittiertem unsichtbarem Licht (111) gemäß dem Bildanalyseergebnis für jedes Pixels (212), für Bereiche von Pixeln (212) oder für Pixel (212) reguliert, die in der Umgebung der Position des Berührungspunktes (214) angeordnet sind.

6. Vorrichtung (2) nach Anspruch 5, wobei das unsichtbare Licht Infrarot(IR)licht ist.

7. Vorrichtung (2) nach Anspruch 6, wobei das Hintergrundbeleuchtungsmodul (22) ferner mindestens eine Infrarot(IR)licht emittierende Einheit zum Emittieren des IR-Lichts (2221) aufweist.

8. Vorrichtung (2) nach Anspruch 7, wobei das Hintergrundbeleuchtungsmodul (22) ferner mindestens eine rotes Licht emittierende Einheit, eine grünes Licht emittierende Einheit und eine blaues Licht emittierende Einheit aufweist, und wobei das IR-Licht (2221) zusätzlich durch die rotes Licht emittierende Einheit emittiert wird.

9. Vorrichtung (2) nach einem der Ansprüche 5 bis 8, wobei die mindestens eine Lichterfassungseinheit (23) innerhalb des Hintergrundbeleuchtungsmoduls (22) angeordnet ist.

10. Berührungseingabeverfahren, das auf ein Touch-Display anwendbar ist, wobei das Touch-Display ein Anzeigemodul (21), ein Hintergrundbeleuchtungsmodul (22), Lichterfassungseinheiten (23), eine Speichereinheit (25) und ein Verarbeitungsmodul (24) aufweist,
wobei das Anzeigemodul (21) dazu geeignet ist, ein Bild darzustellen,
das Hintergrundbeleuchtungsmodul (22) Quellen (222) für unsichtbares Licht aufweist,
die Quellen (222) für unsichtbares Licht dazu geeignet sind, unsichtbares Licht (111) zu emittieren,
die Lichterfassungseinheiten (23) dazu geeignet sind, reflektiertes Licht des durch die Quellen (222) für unsichtbares Licht emittierten und durch mindestens ein Objekt (26) auf dem Anzeigemodul (21) reflektierten unsichtbaren Lichts zu erfassen und ein entsprechendes Lichtintensitätssignal (231) zu erzeugen,
die Speichereinheit (25) dazu geeignet ist, einen Schwellenwert (251) zu speichern, und
das Verarbeitungsmodul dazu geeignet ist, das Lichtintensitätssignal (231) und den Schwellenwert (251) zu empfangen und das Lichtintensitätssignal (231) mit dem Schwellenwert (251) zu vergleichen, um mindestens einen durch das mindestens eine Objekt (26) berührten Berührungspunkt (214) auf dem Anzeigemodul (21) zu bestimmen,
wobei das Berührungseingabeverfahren die folgenden Schritte aufweist:
Verwenden des Verarbeitungsmoduls (24) zum Empfangen des auf dem Anzeigemodul (21) dargestellten Bildes;
**gekennzeichnet durch**
Verwenden des Verarbeitungsmoduls (24) zum Analysieren des Bildes, um ein Bildanalyseergebnis für jedes Pixels (212) im Anzeigemodul, für spezifizierte Bereiche von Pixeln (212) oder für Pixel (212) zu erhalten, die in der Umgebung der Position des Berührungspunktes (214) angeordnet sind; und
Verwenden des Verarbeitungsmoduls (24) zum Einstellen des Schwellenwertes (251) gemäß dem Bildanalyseergebnis für jedes Pixel (212), für Bereiche von Pixeln (212) oder für Pixel (212), die in der Umgebung der Position des Berührungspunktes (214) angeordnet sind.

11. Verfahren nach Anspruch 10, wobei das Bildanalyseergebnis eine Graustufenwertverteilungsanalyseergebnis ist.

12. Verfahren nach Anspruch 10, wobei das Bildanalyseergebnis ein Verteilungsanalyseergebnis für rotes Licht ist.

13. Berührungseingabevorrichtung (2) mit:
einem Anzeigemodul (21), das dazu geeignet ist, ein Bild darzustellen;
einem Hintergrundbeleuchtungsmodul (22) mit Quellen (222) für unsichtbares Licht, die dazu geeignet sind, unsichtbares Licht (111) zu emittieren,
mindestens einer Lichterfassungseinheit (23), die dazu geeignet sind, reflektiertes Licht des durch die Quellen (222) für unsichtbares Licht emittierten und durch mindestens ein Objekt (26) auf dem Anzeigemodul (21) reflektierten unsichtbaren Lichts zu erfassen und ein entsprechendes Lichtintensitätssignal (231) zu erzeugen,
einer Speichereinheit (25), die dazu geeignet ist, einen Schwellenwert (251) zu speichern; und
einem Verarbeitungsmodul (24), das mit dem Anzeigemodul (21), dem Hintergrundbeleuchtungsmodul (22), den Lichterfassungseinheiten (23) und der Speichereinheit (25) verbunden ist,
wobei das Verarbeitungsmodul (24) dazu geeignet ist, das Lichtintensitätssignal (231) und den Schwellenwert (251) zu empfangen und das Lichtintensitätssignal (231) mit dem Schwellenwert (251) zu vergleichen, um mindestens einen durch das mindestens eine Objekt (26) berührten Berührungspunkt (214) auf dem Anzeigemodul (21) zu bestimmen,
wobei das Verarbeitungsmodul (24) das auf dem Anzeigemodul (21) dargestellte Bild empfängt und das Bild analysiert, um ein Bildanalyseergebnis für jedes Pixel (21) im Anzeigemodul, für spezifizierte Bereiche von Pixeln (212) oder für Pixel (212) zu erhalten, die in der Umgebung der Position des Berührungspunktes (214) angeordnet sind, und den Schwellenwert (251) gemäß dem Bildanalyseergebnis für jedes Pixel (212), für Bereiche von Pixeln (212) oder für Pixel (212), die in der Umgebung der Position des Berührungspunktes (214) angeordnet sind, einstellt.

14. Vorrichtung (2) nach Anspruch 13, wobei das unsichtbare Licht (111) IR-Licht ist.

15. Vorrichtung (2) nach Anspruch 14, wobei das Hintergrundbeleuchtungsmodul (22) ferner mindestens eine IR-Licht emittierende Einheit zum Emittieren von IR-Licht aufweist.

16. Vorrichtung (2) nach Anspruch 15, wobei das Hintergrundbeleuchtungsmodul (22) ferner mindestens eine rotes Licht emittierende Einheit, eine grünes Licht emittierende Einheit und eine blaues Licht emittierende Einheit aufweist, und wobei das IR-Licht (2221) zusätzlich durch die rotes Licht emittierende Einheit emittiert wird.

## Revendications

1. Procédé d'entrée tactile applicable à un affichage tactile, l'affichage tactile comprenant un module d'affichage (21) avec de multiples pixels (212), un module de rétro-éclairage (22), des unités sensibles à la lumière (23) et un module de traitement (24),
le module d'affichage (21) étant adapté pour afficher une image,
le module de rétro-éclairage (22) comportant des sources de lumière invisible (222) qui sont adaptées pour émettre de la lumière invisible (111),
les unités sensibles à la lumière (23) étant adaptées pour détecter une lumière invisible réfléchie qui est émise par les sources de lumière invisible (222) et réfléchie par au moins un objet (26) sur le module d'affichage (21) et générer un signal d'intensité lumineuse (231) de manière correspondante, et
le module de traitement (24) étant adapté pour recevoir le signal d'intensité lumineuse (231) et déterminer sur la base du signal d'intensité lumineuse (231) reçu au moins un point tactile (214) sur le module d'affichage (21) touché par l'au moins un objet (26), le procédé d'entrée tactile comprenant les étapes suivantes :
d'utilisation du module de traitement (24) pour recevoir l'image affichée sur le module d'affichage (21) ; **caractérisé par**
l'utilisation du module de traitement (24) pour analyser l'image afin d'obtenir un résultat d'analyse d'image au niveau de chaque pixel (21) dans le module d'affichage, des zones précises de pixels (212) ou des pixels (212) situés aux alentours de la position du point tactile (214) ; et
d'utilisation du module de traitement (24) pour réguler l'intensité lumineuse de la lumière invisible (111) émise à partir des sources de lumière invisible (222) du module de rétro-éclairage (22) en fonction du résultat d'analyse d'image pour chaque pixel (212), des zones de pixels (212) ou des pixels (212) situés aux alentours de la position du point tactile (214), respectivement.

2. Procédé d'entrée tactile selon la revendication 1, dans lequel le résultat d'analyse d'image est un résultat d'analyse de la distribution du niveau des gris.

3. Procédé d'entrée tactile selon la revendication 1 ou 2, dans lequel le module de rétro-éclairage (22) comporte en outre au moins une unité d'émission de lumière rouge, une unité d'émission de lumière verte, et une unité d'émission de lumière bleue ; et la lumière invisible (111) est émise de manière additionnelle à partir de l'unité d'émission de lumière rouge.

4. Procédé d'entrée tactile selon l'une quelconque des revendications 1 à 3, dans lequel le résultat d'analyse d'image est un résultat d'analyse de la distribution de la lumière rouge.

5. Dispositif d'entrée tactile (2) comprenant :
un module d'affichage (21) capable d'afficher une image ;
un module de rétro-éclairage (22) comportant des sources de lumière invisible (222), les sources de lumière invisible (222) étant capables d'émettre une lumière invisible (111) ;
des unités sensibles à la lumière (23) capables de détecter une lumière invisible réfléchie émise par les sources de lumière invisible (222) et réfléchie par au moins un objet (26) sur le module d'affichage (21) et de générer un signal d'intensité lumineuse (231) de manière correspondante ; et
un module de traitement (24) étant connecté au module d'affichage (21), au module de rétro-éclairage (22) et aux unités sensibles à la lumière (23) ;
le module de traitement (24) étant capable de recevoir le signal d'intensité lumineuse (231) et de déterminer sur la base du signal d'intensité lumineuse (231) reçu au moins un point tactile (214) sur le module d'affichage (21) touché par l'au moins un objet (26) ;
où le module de traitement (24) reçoit l'image affichée sur le module d'affichage (21) et analyse l'image afin d'obtenir un résultat d'analyse d'image dans chaque pixel (212) dans le module d'affichage, des zones précises de pixels (212) ou des pixels (212) situés aux alentours de la position du point tactile (214), et régule l'intensité lumineuse d'une lumière invisible (111) émise à partir des sources de lumière invisible (222) du module de rétro-éclairage (22) en fonction du résultat d'analyse d'image pour chaque pixel (212), des zones de pixels (212) ou des pixels (212) situés aux alentours de la position du point tactile (214), respectivement.

6. Dispositif d'entrée tactile (2) selon la revendication 5, dans lequel la lumière invisible (111) est une lumière infrarouge (IR) (2221).

7. Dispositif d'entrée tactile (2) selon la revendication 6, dans lequel le module de rétro-éclairage (22) comporte en outre au moins une unité d'émission de lumière infrarouge (IR) pour l'émission de la lumière IR (2221).

8. Dispositif d'entrée tactile (2) selon la revendication 7, dans lequel le module de rétro-éclairage (22) comporte en outre au moins une unité d'émission de lumière rouge, une unité d'émission de lumière verte et une unité de lumière bleue ; et la lumière IR (2221) est émise de manière additionnelle à partir de l'unité d'émission de lumière rouge.

9. Dispositif d'entrée tactile (2) selon l'une quelconque des revendications 5 à 8, dans lequel l'au moins une unité sensible à la lumière (23) est agencée à l'intérieur du module de rétro-éclairage (22).

10. Procédé d'entrée tactile applicable à un affichage tactile, l'affichage tactile comportant un module d'affichage (21), un module de rétro-éclairage (22), des unités sensibles à la lumière (23), une unité de stockage (25) et un module de traitement (24),
le module d'affichage (21) étant adapté pour afficher une image, le module de rétro-éclairage (22) comportant des sources de lumière invisible (222),
les sources de lumière invisible (222) étant adaptées pour émettre de la lumière invisible (111),
l'unité sensible à la lumière (23) étant adaptée pour détecter une lumière réfléchie de la lumière invisible émise par les sources de lumière invisible (222) et réfléchie par au moins un objet (26) sur le module d'affichage (21) et pour générer un signal d'intensité lumineuse (231) de manière correspondante,
l'unité de stockage (25) étant adaptée pour stocker une valeur limite (215), et
le module de traitement (24) étant adapté pour recevoir le signal d'intensité lumineuse (231) et la valeur limite (251) et pour comparer le signal d'intensité lumineuse (231) avec la valeur limite (251) afin de déterminer au moins un point tactile (214) sur le module d'affichage (21) touché par l'au moins un objet (26),
le procédé d'entrée tactile comprenant les étapes suivantes :
d'utilisation du module de traitement (24) pour recevoir l'image affichée sur le module d'affichage (21) ; **caractérisé par**
l'utilisation du module de traitement (24) pour analyser l'image afin d'obtenir un résultat d'analyse d'image au niveau de chaque pixel (21) dans le module d'affichage, des zones précises de pixels (212) ou des pixels (212) situés aux alentours de la position du point tactile (214) ; et
d'utilisation du module de traitement (24) pour ajuster la valeur limite (215) en fonction du résultat d'analyse d'image pour chaque pixel (212), des zones de pixels (212) ou des pixels (212) situés aux alentours de la position du point tactile (214), respectivement.

11. Procédé d'entrée tactile selon la revendication 10, dans lequel le résultat d'analyse d'image est un résultat d'analyse de la distribution d'un niveau de gris.

12. Procédé d'entrée tactile selon la revendication 10, dans lequel le résultat d'analyse d'image est un résultat d'analyse de la distribution d'un niveau de lumière rouge.

13. Dispositif d'entrée tactile (2) comprenant :
un module d'affichage (21) capable d'afficher une image ;
un module de rétro-éclairage (22) comportant des sources de lumière invisible (222), qui sont capables d'émettre une lumière invisible (111) ;
au moins une unité sensible à la lumière (23) capable de détecter de la lumière réfléchie de la lumière invisible émise par les sources de lumière invisible (222) et réfléchie par au moins un objet (26) sur le module d'affichage (21) et de générer un signal d'intensité lumineuse (231) de manière correspondante ;
une unité de stockage (25) capable de stocker une valeur limite (215) ; et
un module de traitement (24) étant connecté au module d'affichage (21), au module de rétro-éclairage (22), aux unités sensibles à la lumière (23) et à l'unité de stockage (25) ;
le module de traitement (24) étant capable de recevoir le signal d'intensité lumineuse (231) et la valeur limite (251) et de comparer le signal d'intensité lumineuse (231) avec la valeur limite (251) afin de déterminer au moins un point tactile (214) sur le module d'affichage (21) touché par l'au moins un objet (26) ;
où le module de traitement (24) reçoit l'image affichée sur le module d'affichage (21) et analyse l'image pour obtenir un résultat d'analyse d'image dans chaque pixel (212) dans le module d'affichage , des zones précises de pixels (212) ou des pixels (212) situés aux alentours de la position du point tactile (214), et ajuste la valeur limite (251) en fonction du résultat d'analyse d'image pour chaque pixel (212), des zones de pixels (212) ou des pixels (212) situés aux alentours de la position du point tactile (214), respectivement.

14. Dispositif d'entrée tactile (2) selon la revendication 13, dans lequel la lumière invisible (111) est une lumière IR (2221).

15. Dispositif d'entrée tactile (2) selon la revendication 14, dans lequel le module de rétro-éclairage (22) comporte en outre au moins une unité émettant de la lumière IR pour l'émission d'une lumière IR (2221).

16. Dispositif d'entrée tactile (2) selon la revendication 15, dans lequel le module de rétro-éclairage (22) comporte en outre au moins une unité d'émission de lumière rouge, une unité d'émission de lumière verte et une unité d'émission de lumière bleue, et de la lumière IR (2221) est émise de manière additionnelle à partir de l'unité d'émission de lumière rouge.
